# FASCICULE DE BREVET EUROPEEN

(11) **EP 3 026 246 B1**
(45) Date de publication et mention de la délivrance du brevet: **16.08.2017**
(21) Numéro de dépôt: 15191804.2
(22) Date de dépôt: 28.10.2015
(51) Int. Cl.: F02G 5/04, F02G 5/02, F01N 5/02, F01K 23/02, F01K 23/06

(54) **DISPOSITIF DE RÉCUPÉRATION D'ÉNERGIE À CYCLE RANKINE AYANT UNE SOURCE FROIDE RÉGULÉE ET VÉHICULE ÉQUIPÉ D'UN TEL DISPOSITIF, PROCÉDÉ DE RÉCUPÉRATION D'ÉNERGIE CORRESPONDANT**
VORRICHTUNG ZUR ENERGIERÜCKGEWINNUNG ÜBER EINEN RANKINE-ZYKLUS, DIE MIT EINEM GEREGELTEN WÄRMERESERVOIR TIEFERER TEMPERATUR AUSGESTATTET IST, UND MIT EINER SOLCHEN VORRICHTUNG AUSGERÜSTETES FAHRZEUG SOWIE ENTSPRECHENDES ENERGIERÜCKGEWINNUNGSVERFAHREN
ENERGY RECOVERY DEVICE WITH RANKINE CYCLE HAVING A CONTROLLED COLD SOURCE AND VEHICLE PROVIDED WITH SUCH A DEVICE, CORRESPONDING METHOD FOR ENERGY RECOVERY

(30) Priorité: 25.11.2014 FR 1461419
(43) Date de publication de la demande: 01.06.2016
(73) Titulaire: VALEO SYSTEMES THERMIQUES, 78320 Le Mesnil Saint-Denis (FR)
(72) Inventeur: YAHIA, Mohamed, 75005 PARIS (FR); NICOLAS, Bertrand, 92150 SURESNES (FR); HAMMI, Samy, 75015 PARIS (FR); LIU, Jin-Ming, 78700 CONFLANS SAINTE-HONORINE (FR); HALLER, Régine, 78490 BOISSY-SANS-AVOIR (FR); GLAVATSKAYA, Yulia, 75009 PARIS (FR); TAKLANTI, Abdelmajid, 78320 LÉVIS-SAINT-NOM (FR)
(74) Mandataire: Metz, Gaëlle

(56) Documents cités:
- WO-A1-2012/115572
- WO-A1-2012/125107
- DE-A1-102007 024 894
- DE-A1-102012 200 892

## Description

La présente invention concerne la récupération d'énergie dans les véhicules à moteur et plus particulièrement les véhicules à moteur thermique.

Le système de motorisation d'un véhicule à moteur thermique comprend généralement un circuit d'admission d'un carburant et d'un comburant, un circuit d'échappement de gaz brûlés et un circuit de refroidissement du moteur pour maintenir celui-ci à une température inférieure à une température limite de fonctionnement.

Le système de motorisation assure principalement l'entraînement des roues du véhicule, dans le cas d'un véhicule terrestre, mais également l'entraînement d'un alternateur chargeant une batterie électrique alimentant les équipements électriques et électroniques embarqués dans le véhicule.

Depuis les premiers chocs pétroliers et l'essor des considérations environnementales, les motoristes travaillent sur l'augmentation du rendement du moteur de manière à limiter la consommation en carburant et les rejets polluants du moteur.

Il est connu qu'une partie de l'énergie résultant de la combustion du mélange carburant-comburant est dissipée sous forme de chaleur.

Il a notamment été envisagé un dispositif de récupération d'énergie mettant en oeuvre un cycle thermique de Rankine pour récupérer la chaleur produite en excès par le moteur et la transformer en énergie mécanique. Un tel dispositif comprend un circuit fermé de fluide de travail comportant successivement une pompe de circulation du fluide de travail dans le circuit, un échangeur thermique haute pression ou évaporateur pourvu de moyens d'échange thermique entre une source chaude du moteur et le fluide de travail, un organe d'expansion agencé pour transformer une pression du fluide de travail en travail mécanique, et un échangeur thermique basse pression qui est relié à la pompe et qui comporte des moyens d'échange thermique entre une source froide et le fluide de travail. La pompe met sous pression le fluide de travail et assure sa circulation dans le circuit de sorte que le circuit de fluide de travail comprenne un tronçon haute pression entre la sortie de la pompe et le détendeur et un tronçon basse pression entre la sortie du détendeur et l'entrée de la pompe. L'évaporateur, ou bouilleur, assure un échange thermique entre la source chaude et le fluide de travail de manière à réchauffer le fluide de travail à haute pression. L'organe d'expansion permet la détente du fluide de travail en transformant la pression du fluide de travail en travail mécanique et/ou électrique. L'échangeur thermique basse pression, assure un échange thermique entre la source froide et le fluide de travail de manière à refroidir le fluide de travail à basse pression. L'échangeur thermique basse pression comprend un échangeur fluide de travail / fluide de refroidissement appelé condenseur, un réservoir et un second échangeur entre le fluide de travail et le fluide de refroidissement appelé sous-refroidisseur. Le fluide de refroidissement peut être de l'air, dans ce cas, le condenseur à air est soumis à un flux d'air engendré par le déplacement du véhicule et assure un échange thermique entre le fluide de travail et le flux d'air pour condenser le fluide de travail à basse pression. Le fluide de refroidissement peut également être un liquide formé d'un mélange d'eau et d'éthylène glycol ou de propylène glycol du système de refroidissement du moteur thermique à combustion interne, dans ce cas, le condenseur à eau est soumis à un débit du fluide de refroidissement et assure un échange thermique entre le fluide de travail et le fluide de refroidissement pour condenser le fluide de travail à basse pression.

Le réservoir (couramment appelé bouteille) stocke la quantité de liquide de travail non circulante et sépare la phase minoritaire gazeuse de la phase majoritaire liquide du fluide de travail sortant du condenseur. Le sous-refroidisseur est soumis à un débit du fluide de refroidissement et assure un échange thermique entre le fluide de travail et le débit du fluide de refroidissement pour amener le fluide de travail à la température optimale pour le fonctionnement du dispositif. En particulier, il est nécessaire que le fluide de travail soit sous forme liquide en entrée de la pompe afin d'éviter des phénomènes de cavitation pouvant entraîner une détérioration de la pompe. Pour s'assurer de cet état liquide, on impose généralement au fluide de travail en entrée de la pompe une température inférieure à sa température de condensation. L'écart de température entre ladite température de condensation et la température imposée, généralement appelé sous-refroidissement, est habituellement d'au moins 5°C mais inférieur à 10°C pour ne pas trop altérer l'efficacité du cycle de Rankine.

Or, dans les dispositifs de récupération d'énergie connus, la température et le débit de la source froide dépendent des conditions de roulage de sorte qu'il est très difficile d'avoir un sous-refroidissement optimal. En particulier, lorsque la charge thermique de la source chaude est faible et que le débit de la source froide est élevée, il existe un fort risque que le sous-refroidissement soit insuffisant pour empêcher l'apparition de phénomènes de cavitation.. A l'inverse, lorsque la charge thermique de la source chaude est forte, il existe un fort risque que le sous-refroidissement soit trop important et dégrade les performances de la récupération d'énergie. Un but de l'invention est de fournir un moyen pour récupérer de l'énergie d'un moteur de véhicule en mettant en oeuvre des moyens relativement simples. On notera également que le document WO 2012/115572 A1 divulgue un dispositif de récupération d'énergie pour véhicule à moteur.

A cet effet, on prévoit, un dispositif de récupération d'énergie pour véhicule à moteur, comprenant un circuit fermé de fluide de travail comportant une pompe de circulation du fluide de travail dans le circuit, un échangeur thermique haute pression ou évaporateur pourvu de moyens d'échange thermique entre une source chaude du moteur et le fluide de travail, un organe d'expansion agencé pour transformer une pression du fluide de travail en travail mécanique, et au moins un échangeur thermique basse pression qui est relié à la pompe et qui comporte des moyens d'échange thermique entre une source froide et le fluide de travail, caractérisé en ce que :
- la source froide comprend un circuit de fluide de refroidissement et un organe de régulation du débit de fluide de refroidissement dans le circuit de fluide de refroidissement,
- le dispositif comprend une unité de commande reliée à un capteur de température du fluide de travail en amont de la pompe et à l'organe de régulation et agencée pour asservir le débit de fluide de refroidissement en fonction de la température du fluide de travail, caractérisé en ce que l'échangeur thermique basse pression comprend un condenseur (6.1), un réservoir (7) et un sous-refroidisseur (6.2) qui sont reliés en série ; et le circuit de fluide de refroidissement (10) comprend une première branche (10.1) en échange thermique avec le condenseur et une deuxième branche (10.2) en échange thermique avec le sous-refroidisseur.

Ainsi, l'organe de régulation permet de gérer le débit de fluide de refroidissement et donc le fonctionnement de l'échangeur thermique basse pression qui agit directement sur la température de condensation et sur la température du fluide de travail en amont de la pompe. L'asservissement de l'organe de régulation permet donc d'asservir la température du fluide de travail et de maîtriser le sous refroidissement du liquide de travail.

Selon un mode de réalisation particulier, l'unité de commande est également reliée à un capteur de pression.

L'invention concerne également un véhicule comportant un moteur thermique et un dispositif de récupération d'énergie du type précité.

L'invention a en outre pour objet un procédé de récupération d'énergie par la mise en oeuvre d'un cycle de Rankine, comprenant les étapes de :
- faire circuler un fluide de travail en boucle entre une source chaude et une source froide ;
- établir un transfert thermique de la source chaude vers le fluide de travail, le fluide de travail étant à relativement haute pression ;
- produire un travail mécanique en provoquant une détente du fluide de travail ;
- établir un transfert thermique du fluide de travail vers la source froide, le fluide étant à relativement basse pression.

La source froide comprend un fluide de refroidissement circulant dans un circuit avec un débit régulé pour amener le fluide de travail à une température comprise entre deux valeurs prédéfinies.

D'autres caractéristiques et avantages de l'invention ressortiront à la lecture de la description qui suit de modes de réalisation particuliers non limitatifs de l'invention.

Il sera fait référence aux dessins annexés, parmi lesquels :
- la figure 1 est une vue schématique d'un premier mode de réalisation du dispositif de l'invention,
- la figure 2 est un organigramme montrant la régulation de la source froide de ce dispositif en cas de sous-refroidissement anormal ;
- la figure 3 est une vue analogue à la figure 1 d'une variante du premier mode de réalisation,
- la figure 4 est un organigramme montrant la régulation de la source froide de ce dispositif en cas de sous-refroidissement anormal ;
- la figure 5 est une vue analogue à la figure 1 d'un deuxième mode de réalisation du dispositif de l'invention,
- la figure 6 est une vue schématique en perspective du volet utilisé pour la régulation dans le deuxième mode de réalisation.

En référence aux figures, l'invention est décrite en application à la récupération d'énergie d'un système de motorisation d'un véhicule automobile à roues motrices. Le système de motorisation comprend, de façon connue en elle-même, un moteur thermique à combustion interne 101, un circuit 102 d'alimentation du moteur thermique 101 en carburant et en comburant, un circuit 103 d'échappement des gaz résultant de la combustion du carburant et du comburant dans le moteur thermique, et un circuit 104 de refroidissement du moteur thermique. Le circuit 104 comprend un radiateur 105 monté en face avant du véhicule. Le fluide de refroidissement est un liquide formé d'un mélange d'eau et d'éthylène-glycol ou de propylène-glycol.

Le véhicule comprend en outre un dispositif de récupération d'énergie, 1, comprenant un circuit fermé 2 contenant un fluide de travail. Le fluide de travail est par exemple un liquide comprenant de l'éthanol.

Le circuit fermé 2 comprend successivement une pompe 3, un échangeur thermique haute pression ou évaporateur 4, un organe d'expansion 5 et un échangeur thermique basse pression 6 qui sont raccordés en série. Les termes « haute pression » et « basse pression » sont employés relativement l'un à l'autre : le circuit fermé 2 a une pression supérieure entre la sortie de la pompe 3 et l'organe d'expansion 5 qu'entre la sortie de l'organe d'expansion 5 et l'entrée de la pompe 3.

La pompe 3 est agencée pour faire circuler le fluide de travail dans le circuit fermé 2 et le mettre sous pression.

L'évaporateur 4 a une entrée reliée à une sortie de la pompe 3 et a une sortie reliée à une entrée de l'organe d'expansion 5. L'évaporateur 4 est pourvu de moyens d'échange thermique entre une source chaude du moteur thermique 101 et le fluide de travail.

L'organe d'expansion 5 est agencé pour transformer une pression du fluide de travail en travail mécanique.

L'échangeur basse pression 6 comprend un condenseur 6.1, un réservoir 7 et un sous-refroidisseur 6.2 qui sont reliés en série. Plus précisément, le condenseur 6.1 a une entrée raccordée à la sortie de l'organe d'expansion 5 et une sortie reliée à une entrée du réservoir 7 ; le sous-refroidisseur 6.2 a une entrée reliée à une sortie du réservoir 7 et une sortie reliée à une entrée de la pompe 3. Le condenseur 6.1 et le sous-refroidisseur 6.2 comportent chacun des moyens d'échange thermique entre une source froide et le fluide de travail. Les moyens d'échange thermique du condenseur 6.1 sont agencés pour assurer une puissance d'échange supérieure à celle des moyens d'échange thermique du sous-refroidisseur 6.2. L'entrée du réservoir 7 débouche dans le haut du réservoir 7 et la sortie du réservoir 7 débouche dans le bas du réservoir 7 de manière à permettre une séparation de la phase gazeuse et de la phase liquide du fluide de travail et de ne prélever que la phase liquide au niveau de la sortie du réservoir 7.

La source froide est un circuit de fluide de refroidissement, 10, qui comprend une première branche 10.1 en échange thermique avec le condenseur 6.1 et une deuxième branche 10.2 en échange thermique avec le sous-refroidisseur 6.2.

Le circuit de fluide de refroidissement comprend un organe 11 de régulation du débit de fluide de refroidissement dans le circuit de fluide de refroidissement 10.

Le dispositif comprend une unité de commande 12. L'unité de commande 12 est reliée à :
- un capteur 13 de température du fluide de travail en amont de la pompe 3 ;
- un capteur 14 de pression du fluide de travail en amont de la pompe 3 ;
- l'organe de régulation 11.

L'unité de commande 12 comprend ici un processeur programmé pour asservir la répartition du débit de fluide de refroidissement à travers l'échangeur 6.2 et l'échangeur 6.1 en fonction de la température et de la pression du fluide de travail.

L'objectif est de maintenir le sous-refroidissement Sbc du fluide de travail, c'est-à-dire l'écart entre la température de condensation du fluide de travail et la température du fluide de travail en sortie du sous-refroidisseur 6.2, entre une valeur minimale (par exemple 5°C) et une valeur maximale (par exemple 10°C). Le sous-refroidissement Sbc est calculé à partir de la température et de la pression du fluide de travail qui sont mesurées en amont de la pompe 3.

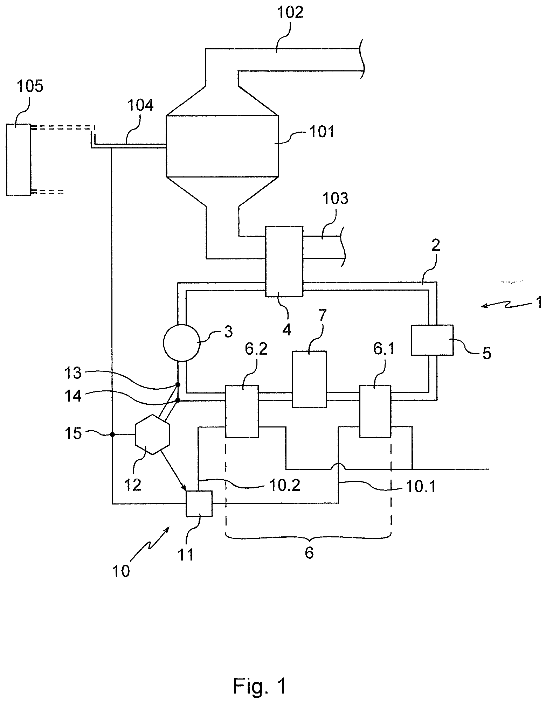

Dans le premier mode de réalisation représenté à la figure 1, la source chaude est le circuit d'échappement 103 et le circuit 10 du fluide de refroidissement formant la source froide est relié au circuit 104 du moteur thermique 101 de sorte que le fluide de refroidissement est le même que celui qui sert au refroidissement du moteur 101. Dans le circuit d'échappement 103 du véhicule en fonctionnement, les gaz ont une température comprise entre 400°C et 900°C avec un débit de gaz moyen compris entre 5 et 70 g.s⁻¹. Le fluide de refroidissement dans les circuits 10 et 104 a une température maximale de110°C environ. Un capteur 15 de température du fluide de refroidissement est relié à l'unité de commande 12 et est monté directement sur le circuit 10 mais on pourrait également utiliser un capteur de température monté sur le circuit de refroidissement 104. Les branches 10.1 et 10.2 du circuit 10 sont reliées en parallèle via l'organe de régulation 11 qui est agencé pour répartir le débit de fluide de refroidissement entre la première branche 10.1 et la deuxième branche 10.2. L'organe de régulation 11 comprend ici une vanne trois voies pilotée par l'unité de commande 12.

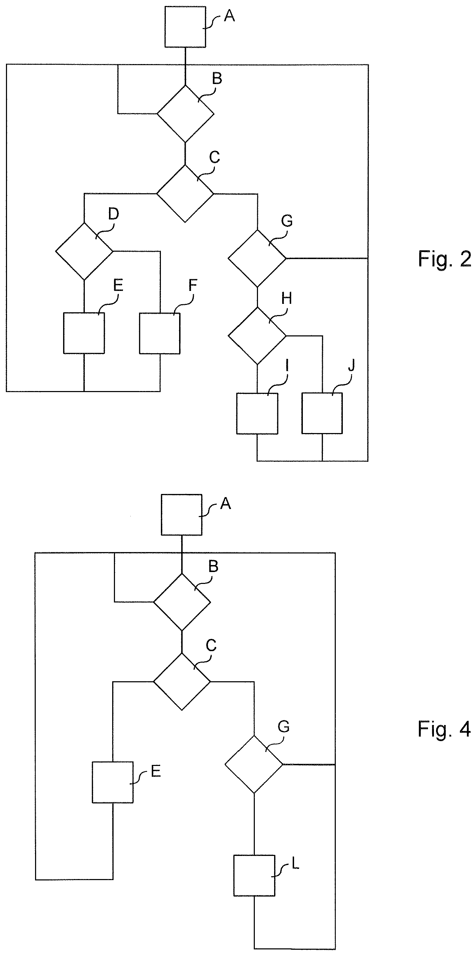

En référence à la figure 2, sont décrits les différents cas qui peuvent être rencontrés après activation du fonctionnement du dispositif de récupération d'énergie (étape A).

Le sous-refroidissement Sbc est dans un premier temps déterminé à partir des mesures de température et de pression du fluide de travail et on vérifie qu'il n'y a pas de dépassement d seuil (étape B).

Dans l'affirmative, on revient à l'étape B pour de nouvelles mesures.

Dans la négative, le sous-refroidissement Sbc est comparé à la valeur minimale prédéterminée (étape C).

Un sous-refroidissement Sbc trop faible se produit par exemple lorsque la charge thermique de la source chaude est trop faible et le débit de fluide de refroidissement dans le circuit 10 est relativement élevé.

Une première cause pouvant avoir conduit à cette situation est que la différence entre la température du fluide de travail en entrée du condenseur 6.2 et la température du fluide réfrigérant dans le circuit 10 est insuffisante. On sait en effet que cette différence doit être au moins égale à une valeur prédéterminée pour pouvoir atteindre la valeur minimale du sous-refroidissement. Par exemple, cette différence de température doit être supérieure ou égale à 7°C pour atteindre un sous-refroidissement d'au moins 5°C. On notera que la température du fluide de travail en entrée du condenseur 6.2 peut être estimée à partir de la température fournie par le capteur de température 13 et que la température du fluide de refroidissement est mesurée par le capteur 15.

On vérifie donc si cette différence de température est supérieure ou égale à 7 (étape D).

Dans ce cas, l'unité de commande 12 est agencée pour commander la vanne trois voies de l'organe de régulation 11 de manière à diminuer le débit de fluide de refroidissement dans le condenseur 6.1 (étape E). Ceci permet d'augmenter la température du fluide de travail en entrée du condenseur 6.2 (température de condensation) et donc d'augmenter la différence entre la température du fluide de travail en entrée du condenseur 6.2 et la température du fluide de refroidissement dans le circuit 10.

Une seconde cause ayant pu conduire à cette situation est que la puissance échangée dans le condenseur 6.2 est insuffisante tandis que la différence entre la température du fluide de travail en entrée du condenseur 6.2 et la température du fluide de refroidissement dans le circuit 10 est, elle, suffisante comme le révèle l'étape D.

Dans ce cas, l'unité de commande 12 est agencée pour commander la vanne trois voies de l'organe de régulation 11 de manière à augmenter le débit de fluide de refroidissement dans le condenseur 6.2 afin d'augmenter la puissance thermique échangée dans le condenseur 6.2 (étape F).

Après les étapes E et F, on revient à l'étape B tant que le dispositif est en fonctionnement.

Lorsque le sous-refroidissement est déterminé comme étant supérieur à la valeur minimale lors de l'étape C, on vérifie s'il est inférieur à la valeur maximale (étape G), auquel cas on revient à l'étape B.

Dans le cas contraire, le sous-refroidissement Sbc est trop fort. Ce cas se produit par exemple lorsque la charge thermique de la source chaude est trop forte et le débit de fluide de refroidissement dans le circuit 10 est relativement faible.

Une première cause pouvant avoir conduit à cette situation est que la différence entre la température du fluide de travail en entrée du condenseur 6.2 et la température du fluide de refroidissement dans le circuit 10 est trop forte. Par exemple, cette différence de température doit être inférieure ou égale à 15°C pour atteindre un sous-refroidissement d'au plus 10°C.

On vérifie donc si cette différence de température est inférieure ou égale à 15 (étape H).

Dans la négative, l'unité de commande 12 est agencée pour commander la vanne trois voies de l'organe de régulation 11 de manière à augmenter le débit de fluide de refroidissement dans le condenseur 6.1 (étape I). Ceci permet de diminuer la température du fluide de travail en entrée du sous-refroidisseur 6.2 et donc de réduire la différence entre la température du fluide de travail en entrée du condenseur 6.2 et la température du fluide réfrigérant dans le circuit 10.

Si la différence entre la température du fluide de travail en entrée du condenseur 6.2 et la température du fluide de refroidissement dans le circuit 10 est normale, la puissance échangée dans le condenseur 6.2 est trop forte.

Dans ce cas, l'unité de commande 12 est agencée pour commander la vanne trois voies de l'organe de régulation 11 de manière à diminuer le débit de fluide de refroidissement dans le condenseur 6.2 afin de diminuer la puissance thermique échangée dans le condenseur 6.2 (étape J).

Après les étapes I et J, on revient à l'étape B tant que le dispositif est en fonctionnement.

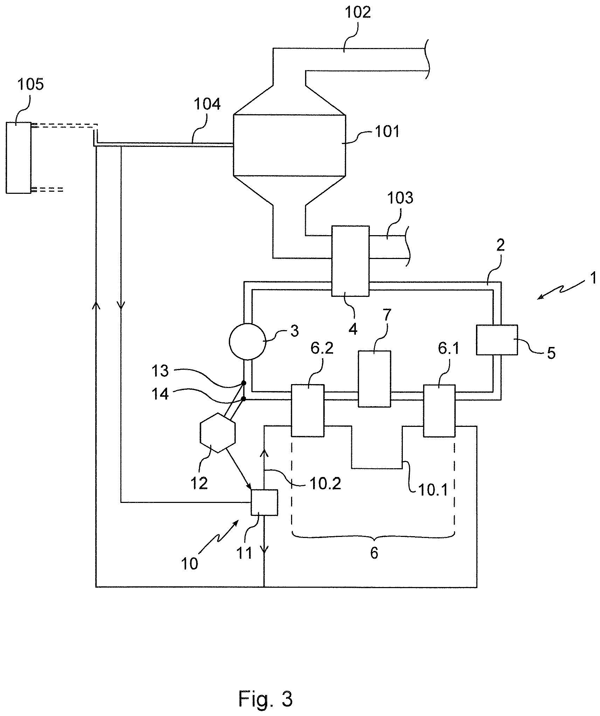

Dans la variante du premier mode de réalisation représentée à la figure 3, la structure du dispositif de récupération est sensiblement identique à celle du premier mode de réalisation sauf en ce que le circuit 10 comprend une première branche 10.1 d'échange thermique avec le condenseur 6.1 et une deuxième branche 10.2 d'échange thermique avec le sous-refroidisseur 6.2. Le circuit de fluide de refroidissement comprend un organe 11 de régulation du débit de fluide de refroidissement dans le circuit de fluide de refroidissement 10. Le fluide de refroidissement est un liquide formé d'un mélange d'eau et d'éthylène-glycol ou de propylène-glycol. Dans ce mode de réalisation, les branches 10.1, 10.2 sont reliées en série l'une avec l'autre et avec l'organe de régulation 11 qui est une vanne trois voies assurant une déviation d'une partie du débit du liquide de refroidissement du circuit 104 vers les échangeurs 6.1 et 6.2.

Le fonctionnement du dispositif de régulation est simplifié par rapport à celui du premier mode de réalisation (voir la figure 4). Contrairement au dispositif précédent, la mesure de la température du liquide de refroidissement réalisée par le capteur 15 n'est pas nécessaire.

On y retrouve les étapes A, B, C et G.

Lorsque le sous-refroidissement est trop faible, l'unité de commande 12 commande la vanne trois voies de l'organe de régulation 11 pour diminuer le débit de fluide de refroidissement dans les deux condenseurs 6.1, 6.2 (étape K). Ceci permet d'augmenter la température du fluide de travail en entrée du condenseur 6.2 et donc d'augmenter la différence entre la température du fluide de travail en entrée du condenseur 6.2 et la température du liquide de refroidissement dans le circuit 10.

On revient ensuite à l'étape B.

Si le sous-refroidissement n'est pas trop faible, on vérifie s'il est trop fort (étape G). Dans la négative, on revient à l'étape B.

Si le sous-refroidissement est trop important, l'unité de commande 12 commande la vanne trois voies de l'organe de régulation 11 pour augmenter le débit de fluide réfrigérant dans les deux condenseurs 6.1, 6.2 (étape L). Ceci permet de diminuer la température du fluide de travail en entrée du condenseur 6.2 et donc de réduire la différence entre la température du fluide de travail en entrée du condenseur 6.2 et la température du liquide de refroidissement dans le circuit 10.

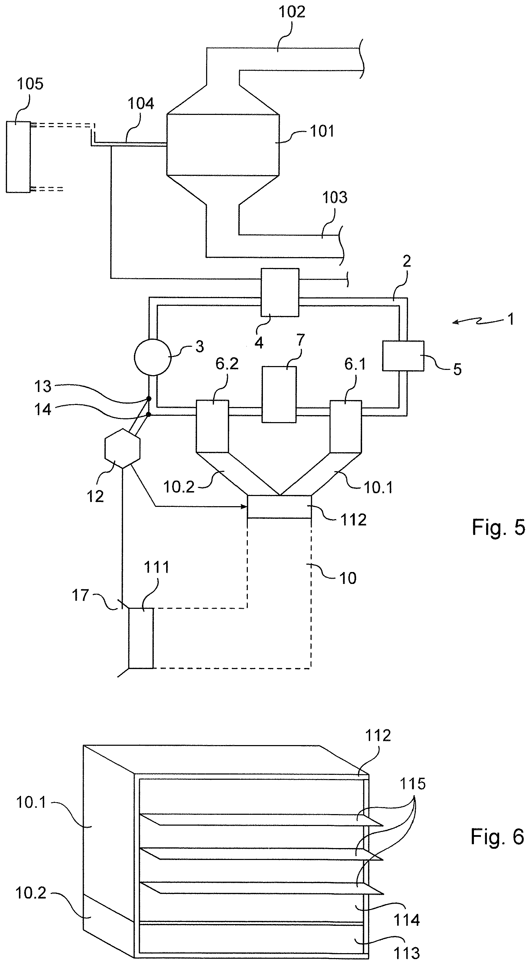

Dans le deuxième mode de réalisation représenté à la figure 5, la source chaude est le circuit 104 du moteur thermique 101 et le fluide de refroidissement constituant la source froide est de l'air.

Le circuit 10 comprend une ouverture d'entrée soumise à un flux d'air lors du déplacement du véhicule. Le fluide de refroidissement dans le circuit 104 a une température de 90°C environ et l'air dans le circuit 10 a une température proche de la température ambiante.

L'organe de régulation comprend un groupe moto-ventilateur 111 monté dans l'entrée du circuit 10 et un volet motorisé, 112, monté dans le circuit 10 en regard de l'entrée des deux branches 10.1, 10.2 du circuit 10.

Comme représenté sur la figure 6, le volet motorisé 112 est raccordé à l'entrée des branches 10.1, 10.2 et comprend une ouverture totalement libre 113 en regard de l'entrée de la branche 10.2 et une ouverture 114 en regard de l'entrée de la branche 10.1. Des lames 115 parallèles sont montées en travers de l'ouverture 114 pour pivoter entre une position d'obturation de l'entrée de la branche 10.1 et une position de dégagement de l'entrée de la branche 10.1.

L'unité de commande 12 est reliée à :
- un capteur 13 de température du fluide de travail en amont de la pompe 3 ;
- un capteur 14 de pression du fluide de travail en amont de la pompe 3 ;
- un capteur 17 de température de l'air extérieur ;
- au groupe moto-ventilateur 111 ;
- au volet motorisé 112.

L'unité de commande 12 est agencée pour commander l'organe de ventilation 12 de manière à asservir le débit de fluide de refroidissement en fonction du sous-refroidissement du fluide de travail.

Le fonctionnement du dispositif de régulation est analogue à celui du premier mode de réalisation.

Comme indiqué précédemment, l'objectif est de maintenir le sous-refroidissement entre une valeur minimale (par exemple 5°C) et une valeur maximale (par exemple 10°C). Le sous-refroidissement est ici calculé à partir de la température et de la pression qui sont mesurées du fluide de travail en amont de la pompe 3. En variante, le sous-refroidissement peut être estimé à partir de la température de l'air extérieur (issue du capteur de température 17) et de la pression du fluide de travail en amont de la pompe 3 (issue du capteur de pression 14).

Plus précisément, si le sous-refroidissement est inférieur à la valeur minimale alors que le véhicule ne roule pas, l'unité de commande 12 commande le groupe motoventilateur 111 à sa vitesse maximale. Si cela n'est pas suffisant, l'unité de commande 12 commande le volet 112 pour réduire le débit d'air dans la branche 10.1.

Si le sous-refroidissement est inférieur à la valeur minimale alors que le véhicule se déplace et que le groupe motoventilateur 111 fonctionne, l'unité de commande 12 commande le groupe motoventilateur 111 à sa vitesse maximale. Si cela n'est pas suffisant, l'unité de commande 12 commande le volet 112 pour réduire le débit d'air dans la branche 10.1.

Si le sous-refroidissement est inférieur à la valeur minimale alors que le véhicule se déplace et que le groupe motoventilateur 111 ne fonctionne pas, l'unité de commande 12 commande le volet 112 pour réduire le débit d'air dans la branche 10.1.

Si le sous-refroidissement est supérieur à la valeur maximale et que le groupe motoventilateur 111 ne fonctionne pas, l'unité de commande 12 commande le volet 112 pour augmenter le débit d'air dans la branche 10.1.

Si le sous-refroidissement est supérieur à la valeur maximale alors que le groupe motoventilateur 111 fonctionne, l'unité de commande 12 réduit la vitesse du groupe motoventilateur 111 au besoin jusqu'à sa vitesse minimale. Si cela n'est pas suffisant, l'unité de commande 12 commande le volet 112 pour augmenter le débit d'air dans la branche 10.1.

Bien entendu, l'invention n'est pas limitée aux modes de réalisation décrits mais englobe toute variante entrant dans le champ de l'invention telle que définie par les revendications.

En particulier, le dispositif de récupération d'énergie peut avoir une structure différente de celle décrite. Le dispositif peut ainsi ne comprendre qu'un condenseur et être dépourvu de réservoir 7. Le dispositif comprend alors un accumulateur en aval de l'évaporateur.

L'unité de commande peut n'être reliée qu'à un capteur de température du fluide de travail. Le dispositif peut être dépourvu de capteur de température du fluide de refroidissement : la régulation est alors effectuée par approches successives.

Dans le deuxième mode de réalisation, il est possible de prévoir des volets en entrée de la branche 10.2 également.

L'organe de régulation peut comprendre en outre dans ce mode de réalisation un groupe moto-ventilateur dans chaque branche du circuit 10, ou aucun groupe moto-ventilateur.

Le dispositif de l'invention est applicable à tout type de véhicule pourvu d'un moteur et par exemple un navire ou un aéronef.

## Revendications

1. Dispositif de récupération d'énergie pour véhicule à moteur, comprenant un circuit fermé (2) de fluide de travail comportant une pompe (3) de circulation du fluide de travail dans le circuit, un échangeur thermique haute pression ou évaporateur (4) pourvu de moyens d'échange thermique entre une source chaude du moteur et le fluide de travail, un organe d'expansion (5) agencé pour transformer une pression du fluide de travail en travail mécanique, et un échangeur thermique basse pression (6) qui est relié à la pompe et qui comporte des moyens d'échange thermique entre une source froide et le fluide de travail, **caractérisé en ce que** :
- la source froide comprend un circuit (10) de fluide de refroidissement et un organe de régulation (11) du débit de fluide de refroidissement dans le circuit de fluide de refroidissement,
- le dispositif comprend une unité de commande (12) reliée à un capteur de température du fluide de travail (13) en amont de la pompe et à l'organe de régulation (11), et agencée pour asservir le débit de fluide de refroidissement en fonction de la température du fluide de travail, **caractérisé en ce que** l'échangeur thermique basse pression comprend un condenseur (6.1), un réservoir (7) et un sous-refroidisseur (6.2) qui sont reliés en série ; et le circuit de fluide de refroidissement (10) comprend une première branche (10.1) en échange thermique avec le condenseur et une deuxième branche (10.2) en échange thermique avec le sous-refroidisseur.

2. Dispositif selon la revendication 1, dans lequel l'organe de régulation (11) est agencé pour répartir le débit de fluide de refroidissement entre la première branche (10.1) et la deuxième branche (10.2) du circuit de fluide de refroidissement (10).

3. Dispositif selon la revendication 2, dans lequel le fluide de refroidissement est un liquide et l'organe de régulation (11) comprend une vanne trois voies pour répartir le débit de fluide de refroidissement entre la première branche (10.1) et la deuxième branche (10.2) du circuit de fluide de refroidissement (10).

4. Dispositif selon la revendication 1, dans lequel l'organe de régulation (11) est une vanne trois voies.

5. Véhicule comportant un moteur thermique (101) et un dispositif de récupération d'énergie (1) selon l'une quelconque des revendications précédentes.

6. Véhicule selon la revendication 5, dans lequel le moteur (101) est relié à un circuit d'échappement (103) formant la source chaude du dispositif de récupération d'énergie (1) et à un circuit de refroidissement (104) formant la source froide du dispositif de récupération d'énergie.

7. Véhicule selon la revendication 5, dans lequel le moteur (101) est relié à un circuit d'échappement des gaz (103) formant la source chaude du dispositif de récupération d'énergie (1) et le fluide de refroidissement formant la source froide est de l'air.

8. Procédé de récupération d'énergie par la mise en oeuvre d'un cycle de Rankine, comprenant les étapes de :
- faire circuler un fluide de travail en boucle entre une source chaude et une source froide ;
- établir un transfert thermique de la source chaude vers le fluide de travail, le fluide étant à relativement haute pression ;
- produire un travail mécanique en provoquant une détente du fluide de travail ;
- établir un transfert thermique du fluide de travail vers la source froide, le fluide étant à relativement basse pression ;
**caractérisé en ce que** la source froide comprend un fluide de refroidissement circulant dans un circuit d'un dispositif de récupération d'énergie pour véhicule automobile, ledit fluide circulant dans ledit circuit avec un débit régulé pour amener le fluide de travail à une température comprise entre une valeur minimale de sous-refroidissement et une valeur maximale de sous-refroidissement, ledit dispositif de récupération d'énergie pour véhicule automobile étant conforme à l'une quelconque des revendications 1 à 4.

9. Procédé selon la revendication 8, dans lequel la valeur minimale de sous-refroidissement est inférieure d'au moins 5°C à une température de condensation du fluide de travail.

10. Procédé selon la revendication 8, dans lequel la valeur maximale de sous-refroidissement est inférieure d'au plus 15°C à une température de condensation du fluide de travail.

11. Procédé selon la revendication 10, dans lequel la valeur maximale de sous-refroidissement est inférieure d'au plus 10°C à une température de condensation du fluide de travail.

12. Procédé selon la revendication 8, dans lequel, lors de la régulation, il est tenu compte de la différence entre la température du fluide de travail lors de l'échange thermique à basse pression et la température du fluide de refroidissement.

## Patentansprüche

1. Vorrichtung zur Energierückgewinnung für ein Kraftfahrzeug, welche einen geschlossenen Arbeitsfluidkreislauf (2) umfasst, der eine Pumpe (3) zur Umwälzung des Arbeitsfluids in dem Kreislauf, einen Hochdruckwärmetauscher oder Verdampfer (4), der mit Mitteln zum Wärmeaustausch zwischen einer Wärmequelle des Motors und dem Arbeitsfluid versehen ist, ein Expansionsorgan (5), das dafür ausgelegt ist, einen Druck des Arbeitsfluids in mechanische Arbeit umzuwandeln, und einen Niederdruckwärmetauscher (6), welcher mit der Pumpe verbunden ist und welcher Mittel zum Wärmeaustausch zwischen einer Kältequelle und dem Arbeitsfluid aufweist, umfasst, **dadurch gekennzeichnet, dass**:
- die Kältequelle einen Kühlfluidkreislauf (10) und ein Organ zur Regelung (11) der Durchflussmenge des Kühlfluids in dem Kühlfluidkreislauf umfasst,
- die Vorrichtung eine Steuereinheit (12) umfasst, die mit einem stromaufwärts der Pumpe angeordneten Sensor für die Temperatur des Arbeitsfluids (13) und mit dem Regelungsorgan (11) verbunden ist und dafür ausgelegt ist, die Durchflussmenge des Kühlfluids in Abhängigkeit von der Temperatur des Arbeitsfluids zu regeln,
**dadurch gekennzeichnet, dass** der Niederdruckwärmetauscher einen Kondensator (6.1), einen Behälter (7) und einen Unterkühler (6.2) umfasst, welche in Reihe verbunden sind; und der Kühlfluidkreislauf (10) einen ersten Zweig (10.1), der mit dem Kondensator im Wärmeaustausch steht, und einen zweiten Zweig (10.2), der mit dem Unterkühler im Wärmeaustausch steht, umfasst.

2. Vorrichtung nach Anspruch 1, wobei das Regelungsorgan (11) dafür ausgelegt ist, die Durchflussmenge des Kühlfluids zwischen dem ersten Zweig (10.1) und dem zweiten Zweig (10.2) des Kühlfluidkreislaufs (10) aufzuteilen.

3. Vorrichtung nach Anspruch 2, wobei das Kühlfluid eine Flüssigkeit ist und das Regelungsorgan (11) ein Dreiwegeventil zum Aufteilen der Durchflussmenge des Kühlfluids zwischen dem ersten Zweig (10.1) und dem zweiten Zweig (10.2) des Kühlfluidkreislaufs (10) umfasst.

4. Vorrichtung nach Anspruch 1, wobei das Regelungsorgan (11) ein Dreiwegeventil ist.

5. Fahrzeug, welches eine Brennkraftmaschine (101) und eine Vorrichtung zur Energierückgewinnung (1) nach einem der vorhergehenden Ansprüche umfasst.

6. Fahrzeug nach Anspruch 5, wobei die Brennkraftmaschine (101) mit einer Abgasanlage (103), welche die Wärmequelle der Vorrichtung zur Energierückgewinnung (1) bildet, und mit einem Kühlkreislauf (104), welcher die Kältequelle der Vorrichtung zur Energierückgewinnung bildet, verbunden ist.

7. Fahrzeug nach Anspruch 5, wobei die Brennkraftmaschine (101) mit einer Abgasanlage (103), welche die Wärmequelle der Vorrichtung zur Energierückgewinnung (1) bildet, verbunden ist und das Kühlfluid, das die Kältequelle bildet, Luft ist.

8. Verfahren zur Energierückgewinnung durch die Durchführung eines Rankine-Kreisprozesses, welches die folgenden Schritte umfasst:
- Bewirken des Zirkulierens eines Arbeitsfluids in einer Schleife zwischen einer Wärmequelle und einer Kältequelle;
- Herstellen eines Wärmeübergangs von der Wärmequelle zu dem Arbeitsfluid, wobei das Fluid einen relativ hohen Druck aufweist;
- Erzeugen einer mechanischen Arbeit durch Hervorrufen einer Entspannung des Arbeitsfluids;
- Herstellen eines Wärmeübergangs von dem Arbeitsfluid zu der Kältequelle, wobei das Fluid einen relativ niedrigen Druck aufweist;
**dadurch gekennzeichnet, dass** die Kältequelle ein Kühlfluid umfasst, das in einem Kreislauf einer Vorrichtung zur Energierückgewinnung für ein Kraftfahrzeug zirkuliert, wobei das Fluid in dem Kreislaufmit einer Durchflussmenge zirkuliert, die so geregelt wird, dass das Arbeitsfluid auf eine Temperatur gebracht wird, die zwischen einem minimalen Wert der Unterkühlung und einem maximalen Wert der Unterkühlung liegt, wobei die Vorrichtung zur Energierückgewinnung für ein Kraftfahrzeug eine Vorrichtung nach einem der Ansprüche 1 bis 4 ist.

9. Verfahren nach Anspruch 8, wobei der minimale Wert der Unterkühlung um wenigstens 5 °C niedriger als eine Kondensationstemperatur des Arbeitsfluids ist.

10. Verfahren nach Anspruch 8, wobei der maximale Wert der Unterkühlung um höchstens 15 °C niedriger als eine Kondensationstemperatur des Arbeitsfluids ist.

11. Verfahren nach Anspruch 10, wobei der maximale Wert der Unterkühlung um höchstens 10 °C niedriger als eine Kondensationstemperatur des Arbeitsfluids ist.

12. Verfahren nach Anspruch 8, wobei bei der Regelung die Differenz zwischen der Temperatur des Arbeitsfluids beim Wärmeaustausch mit niedrigem Druck und der Temperatur des Kühlfluids berücksichtigt wird.

## Claims

1. Energy recovery device for motor vehicle, comprising a closed circuit (2) of working fluid comprising a pump (3) for circulating the working fluid in the circuit, a high-pressure heat exchanger or evaporator (4) provided with means of exchanging heat between a hot source of the engine and the working fluid, an expansion member (5) designed to convert a pressure of working fluid into mechanical work, and a low-pressure heat exchanger (6) which is connected to the pump and which comprises means of exchanging heat between a cold source and the working fluid, **characterized in that**:
- the cold source comprises a cooling-fluid circuit (10) and a regulator (11) that regulates the cooling fluid flowrate in the cooling fluid circuit,
- the device comprises a control unit (12) connected to a working-fluid temperature sensor (13) upstream of the pump and to the regulator (11), and designed to regulate the cooling fluid flowrate according to the temperature of the working fluid,
**characterized in that** the low-pressure heat exchanger comprises a condenser (6.1), a reservoir (7) and a sub cooler (6.2) which are connected in series; and the cooling fluid circuit (10) comprises a first leg (10.1) in a heat exchange relationship with the condenser and a second leg (10.2) in a heat exchange relationship with the sub cooler.

2. Device according to Claim 1, in which the regulator (11) is designed to apportion the flow of cooling fluid between the first leg (10.1) and the second leg (10.2) of the cooling fluid circuit (10).

3. Device according to Claim 2, in which the cooling fluid is a liquid and the regulator (11) comprises a three-way valve to apportion the flow of cooling fluid between the first leg (10.1) and the second leg (10.2) of the cooling fluid circuit (10).

4. Device according to Claim 1, in which the regulator (11) is a three-way valve.

5. Vehicle comprising a combustion engine (101) and an energy recovery device (1) according to any one of the preceding claims.

6. Vehicle according to Claim 5, in which the engine (101) is connected to an exhaust circuit (103) that forms the hot source of the energy recovery device (1) and to a cooling circuit (104) that forms the cold source of the energy recovery device.

7. Vehicle according to Claim 5, in which the engine (101) is connected to an gas exhausting circuit (103) that forms the hot source of the energy recovery device (1) and the cooling fluid that forms the cold source is air.

8. Method for recovering energy by operating a Rankine cycle, characterizing the steps of:
- causing a working fluid to circulate in a loop between a hot source and a cold source;
- establishing a transfer of heat from the hot source to the working fluid, the fluid being at a relatively high pressure;
- producing mechanical work by causing an expansion of the working fluid;
- establishing transfer of heat from the working fluid to cold source, the fluid being at a relatively low pressure;
**characterized in that** the cold source comprises a cooling fluid circulating in a circuit of a motor vehicle energy recovery device, the said fluid circulating in the said circuit at a flowrate that is regulated so as to bring the working fluid to a temperature comprised between a minimum super cooling value and a maximum super cooling value, the said motor vehicle energy recovery device being in accordance with any one of Claims 1 to 4.

9. Method according to Claim 8, in which the minimum super cooling value is at least 5°C below a temperature at which the working fluid condenses.

10. Method according to Claim 8, in which the maximum super cooling value is at most 15°C below a temperature at which the working fluid condenses.

11. Method according to Claim 10, in which the maximum super cooling value is at most 10°C below a temperature at which the working fluid condenses.

12. Method according to Claim 8, in which, during regulation, consideration is given to the difference between the temperature of the working fluid during the low-pressure heat exchange and the temperature of the cooling fluid.
